# EUROPEAN PATENT APPLICATION

(11) **EP 1 566 808 A1**
(43) Date of publication of application: **24.08.2005**
(21) Application number: 04257955.7
(22) Date of filing: 20.12.2004
(51) Int. Cl.: G11B 27/28, G06F 17/30, G11B 27/10

(54) **Method and apparatus for summarizing a plurality of frames**

(30) Priority: 18.02.2004 KR 2004010820
(71) Applicant: SAMSUNG ELECTRONICS CO., LTD., Kyungki-do (KR)
(72) Inventor: Huh, Youngsik, Mapo-gu Seoul (KR); Kim, Sangkyun 103-401 Geumhwa Maeul Daewoo, Yongin-si Gyeonggi-do (KR); Kim, Jiyeun, Songpa-gu Seoul (KR); Hwang, Doosun, Eunpyeong-gu Seoul (KR)
(74) Representative: Ertl, Nicholas Justin

(57) **Abstract**

A method and apparatus for summarizing a plurality of data select representative frames out of a plurality of frames and summarize the representative frames, in an image reproducing system. The method includes: receiving a video stream and extracting a keyframe for each shot; selecting a predetermined number of representative frames from the keyframes corresponding to the shots; and outputting a frame summary using the representative frames, and comprises: receiving still images and selecting a predetermined number of representative frames; and outputting a frame summary using the selected representative frames. The apparatus includes: a representative frame selector receiving a video stream and selecting representative frames; and a frame summary generator summarizing the video stream using the selected representative frames and outputting a frame summary and frame information, and comprises: a representative still image selector receiving still images and selecting a predetermined number of representative frames; and a still image summary generator summarizing the still images using the selected representative frames and outputting a frame summary and frame information. According to the method and apparatus, when a plurality of frames are summarized, the number of frames to be summarized can be selected, reliability of the user with respect to a frame summary can be higher, and various video summarization types can be provided according to a demand of a user.

## Description

### BACKGROUND OF THE INVENTION

The present invention relates to an image reproducing method and apparatus, and more particularly, to a method and apparatus for summarizing a plurality of frames, which classify the plurality of frames and output a frame summary by selecting representative frames from the classified frames.

In general, an image reproducing apparatus, which plays back still images or video streams stored in a storage medium for a user to watch via a display device, has a function of decoding encrypted image data and outputting the decoded image data. Recently, networks, digital storage media, and image compression/decompression technologies have been developed. Accordingly, apparatuses storing digital images in storage media and reproducing the digital images became popular.

When a number of digital video streams or still images are stored in a bulk storage medium, functions to easily and quickly select an image, which a user desires to watch or is interested in, among the stored images and to reproduce the image or to select only an interesting or desired portion of a video and reproduce and edit the portion easily and quickly are very necessary. A function allowing a user to understand contents of video streams easily and quickly is called "video summarization".

One method of summarizing a plurality of frames is to select representative frames from the plurality of frames and browse the representative frames or to view shots ("shot" means a zone including same scenes) including the representative frames in a video stream. The number of selected representative frames or a method of browsing the representative frames can be varied according to a detailed application. In general, to select representative frames, a chosen video stream is split into a number of shots corresponding to scene changes, and one or more keyframes are selected from each shot. Since a number of shots exist in a video stream and the number of keyframes obtained from the shots is very large, it is impertinent to use the keyframes for video summarization. Therefore, clusters are formed by classifying the keyframes according to similarity between frames, and a representative frame is chosen from each cluster, and finally, a frame summary of a video stream is generated. This is a general representative frame selecting method. To form clusters, various clustering methods are disclosed. In a case of applying the Linde-Buzo-Gray method between consecutive frames (refer to U.S. Pat. No. 5,995,095), since frames having low similarity are classified into the same cluster when a pair of keyframes having low similarity is repeated, it may be impertinent to apply the result to video summarization. In a case of applying the nearest neighborhood method to cluster generation (refer to U.S. Pat. No. 6,278,446), it is difficult to control the number of finally output clusters at will, and since it is determined with a special threshold value whether a frame is included in a cluster, an appropriate threshold value must be set for each input video stream. There are cases of applying hierarchical methods to cluster generation (refer to U.S. Pat. Nos. 5,821,945 and 6,535,639, and to U.S. Publication No. 20030058268). However, since the cases simply adopt a general hierarchical method or adopt a method according to a Bayesian model setting, a case where the length of a video stream is long but the number of required clusters is small, a case of a video stream to which a set model is not applied, or a case of classifying frames having high similarity into different clusters is generated. In particular, if the latter problem is generated in a case where the required number of representative frames is very small, since a plurality similar frames can be included in a summary, a user may not trust a provided video summarization function.

### SUMMARY OF THE INVENTION

According to an aspect of the present invention, there is provided a method of summarizing video streams, the method comprising: (a) receiving a video stream and extracting a keyframe for each shot; (b) selecting a predetermined number of representative frames from the keyframes corresponding to the shots; and (c) outputting a frame summary using the representative frames.

Step (a) may comprise: (a1) splitting the input video stream into shots; and (a2) extracting a keyframe for each shot.

Step (b) may comprise: (b1) splitting a plurality of keyframes corresponding to shots into a number of clusters which is the same as a predetermined number of representative frames; and (b2) extracting a representative frame from each cluster. Step (b1) may comprise: composing a node having 0 depth (depth information) for each keyframe of the plurality of keyframes and calculating feature values of the keyframes and differences between the feature values of the keyframes; until the number of highest nodes is equal to the predetermined number of representative frames, selecting two highest nodes having the minimum difference between feature values, connecting the two selected nodes to a new node having a depth obtained by adding 1 to the largest value of depths of the highest nodes, and calculating a feature value of the new node; and until the number of highest nodes, each including a more number of keyframes than a predetermined value (MIN), is equal to the predetermined number of representative frames, removing highest nodes, each including a less number of - keyframes than the predetermined value (MIN), and descendant nodes of the highest nodes and removing a highest node having the largest depth among the remaining highest nodes. Step (b2) may comprise: calculating a mean value of feature values of keyframes included in each cluster; calculating differences between the mean value and the feature values of the keyframes; and selecting a keyframe having the minimum difference value as a representative frame. Step (b2) may comprise: calculating a mean value of feature values of keyframes included in each cluster; calculating differences between the mean value and the feature values of the keyframes; selecting two keyframes having the minimum difference values; and selecting a keyframe satisfying a predetermined condition out of the two selected keyframes as a representative frame.

Step (c) may comprise: summarizing the video stream using the selected representative frames and information of the selected representative frames; and outputting a frame summary and frame information, or comprise: arranging the selected representative frames in temporal order using information of the selected representative frames; outputting a frame summary and frame information; and if the number of representative frames is re-designated, outputting a frame summary and frame information by arranging representative frames, which are selected according to the re-designated number of representative frames, in temporal order. Step (c) may comprise: until a sum of the duration of each shot including the selected representative frames is longer than a predetermined time, increasing the number of representative frames; and until the sum of the duration of each shot including the selected representative frames is shorter than a predetermined time, calculating standard deviations of time differences between shots including representative frames remained by excluding each representative frame and removing a representative frame having the minimum standard deviation when the representative frame is excluded.

According to another aspect of the present invention, there is provided a method of summarizing a plurality of still images, the method comprising: (d) receiving still images and selecting a predetermined number of representative frames; and (e) outputting a frame summary using the selected representative frames.

Step (d) may comprise: (d1) splitting a plurality of still images into a number of clusters which is the same as a predetermined number of representative frames; and (d2) extracting each representative frame for each cluster.

Step (d1) may comprise: composing a node having 0 depth (depth information) for each still image and calculating feature values of the still images and differences between the feature values of the still images; until the number of highest nodes is equal to the predetermined number of representative frames, selecting two highest nodes having the minimum difference between feature values, connecting the two selected nodes to a new node having a depth obtained by adding 1 to the largest value of depths of the highest nodes, and calculating a feature value of the new node; and until the number of highest nodes, each including a more number of still images than a predetermined value (MIN), is equal to the predetermined number of representative frames, removing highest nodes, each including a less number of still images than the predetermined value (MIN), and descendant nodes of the highest nodes and removing a highest node having the largest depth among the remaining highest nodes.

Step (d2) may comprise: calculating a mean value of feature values of still images included in each cluster; calculating differences between the mean value and the feature values of the still images; and selecting a still image having the minimum difference value as a representative frame.

Step (d2) may comprise: calculating a mean value of feature values of still images included in each cluster; calculating differences between the mean value and the feature values of the still images; selecting two still images having the minimum difference values; and selecting a still image satisfying a predetermined condition out of the two selected still images as a representative frame.

According to another aspect of the present invention, there is provided an apparatus for summarizing video streams, the apparatus comprising: a representative frame selector receiving a video stream and selecting representative frames; and a frame summary generator summarizing the video stream using the selected representative frames and outputting a frame summary and frame information.

The representative frame selector may comprise: a keyframe extractor receiving a video stream, extracting a keyframe for each shot, and outputting keyframes corresponding to shots; a frame splitting unit receiving the keyframes corresponding to shots and splitting the keyframes corresponding to shots into a number of clusters which is the same as a predetermined number of representative frames; and a cluster representative frame extractor selecting one representative frame among keyframes corresponding to shots included in each cluster and outputting the representative frames.

The frame splitting unit may comprise: a basic node composing unit receiving the keyframes corresponding to shots and composing a node having 0 depth for each keyframe; a feature value calculator calculating feature values of the keyframes of the nodes and differences between the feature values; and a highest node composing unit selecting two highest nodes having the minimum difference between the feature values and connecting the two selected nodes to a new node having a depth obtained by adding 1 to the largest value of depths of the highest nodes.

The highest node composing unit may further comprise: a minor cluster removing unit removing highest nodes, each including a less number of keyframes than a predetermined value (MIN), and descendant nodes of the highest nodes; and a cluster splitting unit removing a highest node having the largest depth among the remaining highest nodes.

According to another aspect of the present invention, there is provided an apparatus for summarizing still images, the apparatus comprising: a representative still image selector receiving still images and selecting a predetermined number of representative frames; and a still image summary generator summarizing the still images using the selected representative frames and outputting a frame summary and frame information.

The representative still image selector may comprise: a still image splitting unit receiving the still images and splitting the still images into a number of clusters which is the same as a predetermined number of representative frames; and a cluster representative still image extractor selecting one representative frame among still images included in each cluster and outputting the representative frames.

The still image splitting unit may comprise: a still image basic node composing unit receiving the still images and composing a node having 0 depth for each still image; a still image feature value calculator calculating feature values of the still images of the nodes and differences between the feature values; and a still image highest node composing unit selecting two highest nodes having the minimum difference between the calculated feature values and connecting the two selected nodes to a new node having a depth obtained by adding 1 to the largest value of depths of the highest nodes.

The still image highest node composing unit may further comprise: a still image minor cluster removing unit removing highest nodes, each including a less number of still images than a predetermined value (MIN), and descendant nodes of the highest nodes; and a still image cluster splitting unit removing a highest node having the largest depth among the remaining highest nodes.

The invention thus provides a method and apparatus for summarizing a plurality of frames, which classify the plurality of frames according to similarity of frames and output a frame summary by selecting representative frames from the classified frames, in order to solve conventional problems and provide convenience to a user of an image reproducing apparatus by performing a function of summarizing a plurality of still images or a video stream into a certain number of frames.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of an apparatus for summarizing a plurality of frames, which can summarize a video stream, according to an embodiment of the present invention;
FIG. 2 is a detailed block diagram of a representative frame selector of FIG. 1;
FIG. 3 is a detailed block diagram of a frame splitting unit of FIG. 2;
FIG. 4 is a block diagram illustrating a configuration of components added to a highest node composing unit of FIG. 3;
FIG. 5 is a block diagram of an apparatus for summarizing a plurality of frames, which can summarize still images, according to an embodiment of the present invention;
FIG. 6 is a detailed block diagram of a representative still image selector of FIG. 5;
FIG. 7 is a detailed block diagram of a still image splitting unit of FIG. 6;
FIG. 8 is a block diagram illustrating a configuration of components added to a still image highest node composing unit of FIG. 7;
FIG. 9 is a flowchart illustrating an entire operation of an apparatus for summarizing a plurality of frames according to an embodiment of the present invention;
FIG. 10 is a flowchart illustrating a process of receiving a video stream and extracting a keyframe for each shot;
FIG. 11 is a flowchart illustrating a process of selecting representative frames from among keyframes corresponding to shots;
FIG. 12 is a flowchart illustrating a process of splitting a plurality of keyframes corresponding to shots into a number of clusters which is the same as a predetermined number (s) of representative frames;
FIG. 13 is a flowchart illustrating a process of extracting a representative frame from each cluster;
FIG. 14 is a flowchart illustrating another process of extracting a representative frame from each cluster;
FIG. 15 is a flowchart illustrating a process of outputting a frame summary using selected representative frames;
FIG. 16 is an example of an embodiment of a video tag, one of frame summary types;
FIG. 17 is a flowchart illustrating another process of outputting a frame summary using selected representative frames;
FIG. 18 is an example of an embodiment of a story board, one of the frame summary types;
FIG. 19 is a flowchart illustrating another process of outputting a frame summary using selected representative frames; and
FIG. 20 is a flowchart illustrating an entire operation of an apparatus for summarizing a plurality of still images according to an embodiment of the present invention.

### DETAILED DESCRIPTION OF THE INVENTION

Hereinafter, the present invention will now be described more fully with reference to the accompanying drawings, in which embodiments of the invention are shown.

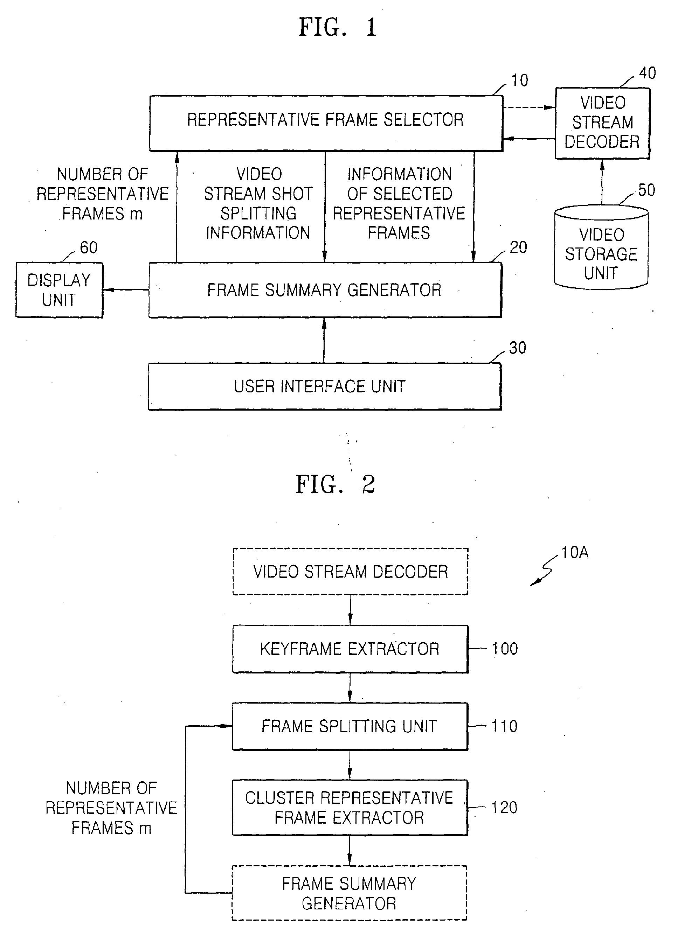

FIG. 1 is a block diagram of an apparatus for summarizing a plurality of frames, which can summarize a video stream, according to an embodiment of the present invention. Referring to FIG. 1, the apparatus includes a representative frame selector 10, a frame summary generator 20, a user interface unit 30, a video stream decoder 40, a video storage unit 50, and a display unit 60.

The representative frame selector 10 receives a decoded video stream from the video stream decoder 40 and selects representative frames equal to a predetermined number of representative frames provided from the frame summary generator 20. The frame summary generator 20 provides the predetermined number of representative frames designated by a user to the representative frame selector 10, receives representative frames selected by the representative frame selector 10 and outputs a frame summary having a format desired by the user to the display unit 60.

The user interface unit 30 provides data generated by a user operation to the frame summary generator 20. The video stream decoder 40 decodes an encrypted video stream stored in the video storage unit 50 and provides the decoded video stream to the representative frame selector 10. The video storage unit 50 stores encrypted video streams. The display unit 60 receives frames summarized in response to a user's command from the frame summary generator 20 and displays the frame summary so that the user can view the frame summary.

FIG. 2 is a detailed block diagram of the representative frame selector 10 of FIG. 1. Referring to FIG. 2, the representative frame selector 10 includes a keyframe extractor 100, a frame splitting unit 110, and a cluster representative frame extractor 120.

The keyframe extractor 100 receives a video stream from the video stream decoder 40, extracts a keyframe for each shot, and outputs the keyframes corresponding to the shots to the frame splitting unit 110. The frame splitting unit 110 receives the keyframes corresponding to the shots from the keyframe extractor 100 and splits the keyframes corresponding to the shots into a number of clusters which is the same as a predetermined number of representative frames provided by the frame summary generator 20. The cluster representative frame extractor 120 receives the split keyframes corresponding to the shots from the frame splitting unit 110, selects one representative frame among keyframes corresponding to the shots included in each cluster, and outputs the representative frames to the frame summary generator 20.

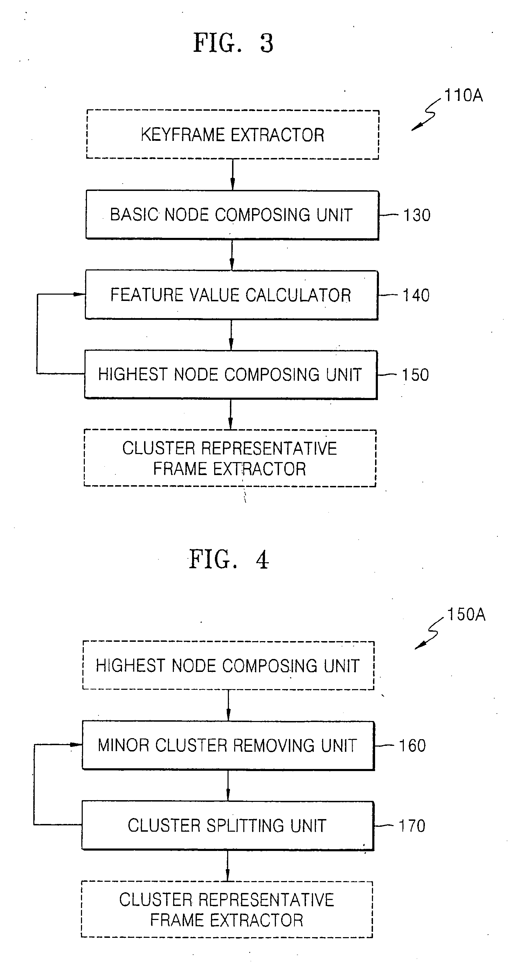

FIG. 3 is a detailed block diagram of the frame splitting unit 110 of FIG. 2. Referring to FIG. 3, the frame splitting unit 110 includes a basic node composing unit 130, a feature value calculator 140, and a highest node composing unit 150.

The basic node composing unit 130 receives the keyframes corresponding to the shots from the keyframe extractor 100 and composes a basic node having 0 depth (depth information) for each keyframe. The feature value calculator 140 calculates feature values of the keyframes of the basic nodes included in highest nodes and differences between the feature values. The highest node composing unit 150 selects two highest nodes having the minimum difference, i.e., the highest similarity, between the calculated feature values and connects the two selected nodes to a new highest node having a depth increased by 1.

FIG. 4 is a block diagram illustrating a configuration of components added to the highest node composing unit 150 of FIG. 3. Referring to FIG. 4, the highest node composing unit 150 further includes a minor cluster removing unit 160 and a cluster splitting unit 170.

The minor cluster removing unit 160 removes highest nodes, each including a less number of keyframes than a predetermined value (MIN), out of the highest nodes received from the highest node composing unit 150 and descendant nodes of the highest nodes. The cluster splitting unit 170 removes a highest node having the largest depth among the remaining highest nodes.

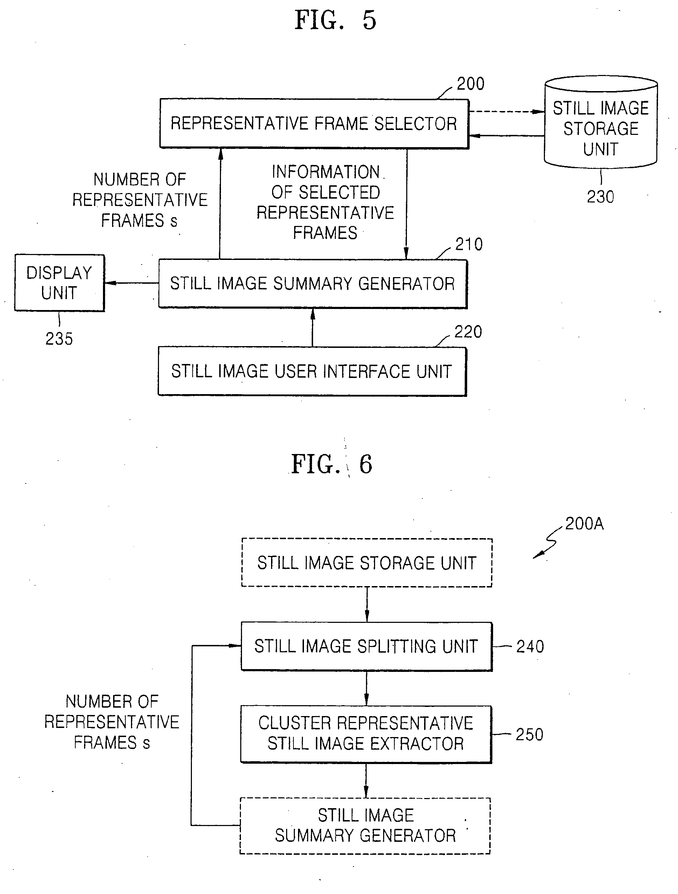

FIG. 5 is a block diagram of an apparatus for summarizing a plurality of frames, which can summarize still images, according to an embodiment of the present invention. Referring to FIG. 5, the apparatus includes a representative still image selector 200, a still image summary generator 210, a still image user interface unit 220, a still image storage unit 230, and a display unit 235.

The representative still image selector 200 receives still images from the still image storage unit 230 and selects representative frames according to the predetermined number of representative frames provided from the still image summary generator 210. The still image summary generator 210 provides the predetermined number of representative frames designated by a user to the representative still image selector 200, receives representative frames selected by the representative still image selector 200, and outputs a frame summary to the display unit 235.

The still image user interface unit 220 provides data generated by a user operation to the still image summary generator 210. The still image storage unit 230 stores still images. The display unit 235 receives the frame summary from the still image summary generator 210 and displays the frame summary so that the user can view the frame summary.

FIG. 6 is a detailed block diagram of the representative still image selector 200 of FIG. 5. Referring to FIG. 6, the representative still image selector 200 includes a still image splitting unit 240 and a cluster representative still image extractor 250.

The still image splitting unit 240 receives the still images from the still image storage unit 230 and splits the still images into a number of clusters which is the same as a predetermined number of representative frames provided by the still image summary generator 210. The cluster representative still image extractor 250 receives the split still images from the still image splitting unit 240, selects one representative frame among still images included in each cluster, and outputs the representative frames to the still image summary generator 210.

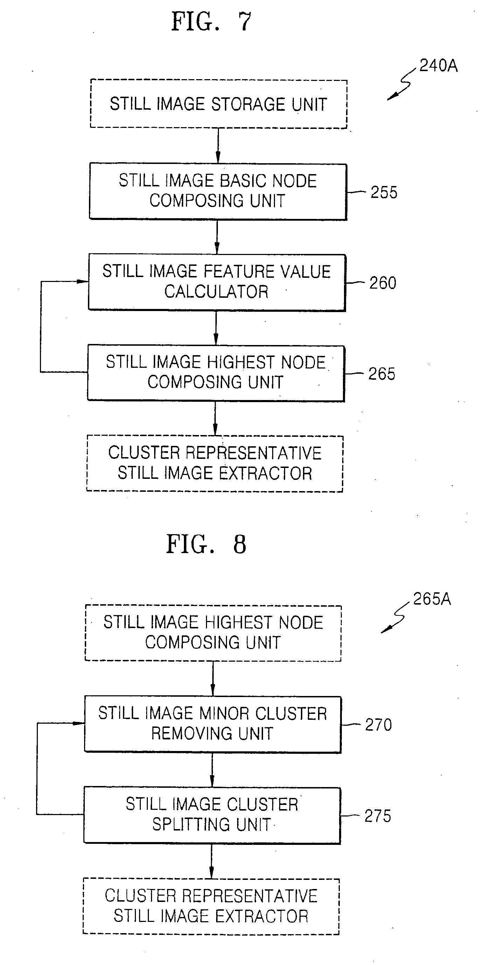

FIG. 7 is a detailed block diagram of the still image splitting unit 240 of FIG. 6. Referring to FIG. 7, the still image splitting unit 240 includes a still image basic node composing unit 255, a still image feature value calculator 260, and a still image highest node composing unit 265.

The still image basic node composing unit 255 receives still images from the still image storage unit 230 and composes a basic node having 0 depth (depth information) for each still image. The still image feature value calculator 260 calculates feature values of the still images included in highest nodes and differences between the feature values. The still image highest node composing unit 265 selects two highest nodes having the minimum difference, i.e., the highest similarity, from among the calculated feature values and connects the two selected nodes to a new highest node having a depth increased by 1.

FIG. 8 is a block diagram illustrating a configuration of components added to the still image highest node composing unit 265 of FIG. 7. Referring to FIG. 8, the still image highest node composing unit 265 further includes a still image minor cluster removing unit 270 and a still image cluster splitting unit 275.

The still image minor cluster removing unit 270 removes highest nodes, each including a less number of still images than a predetermined value (MIN), out of the highest nodes received from the still image highest node composing unit 265 and descendant nodes of the highest nodes. The still image cluster splitting unit 275 removes a highest node having the largest depth among the remaining highest nodes.

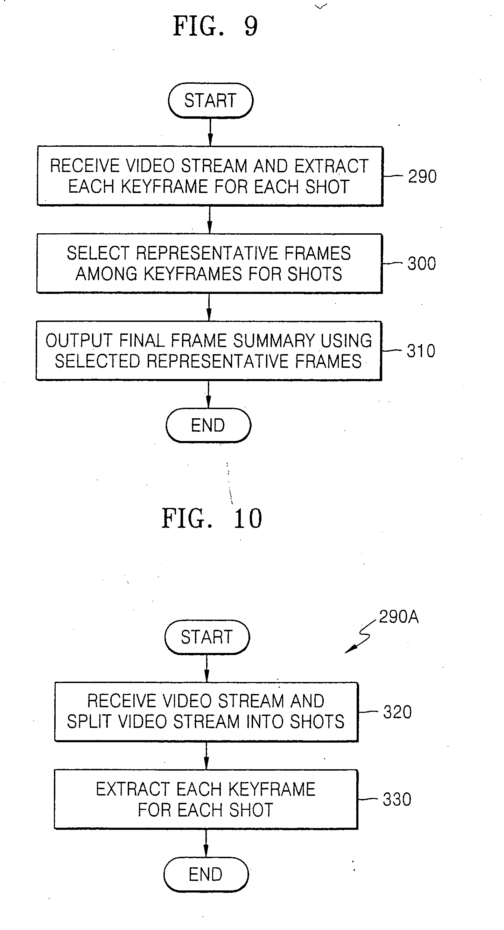

Operations of an apparatus for summarizing a plurality of frames according to an embodiment of the present invention will now be described with reference to FIGS. 9 through 20.

FIG. 9 is a flowchart illustrating an entire operation of an apparatus for summarizing a plurality of frames according to an embodiment of the present invention.

Referring to FIG. 9, first, in step 290, a decoded video stream is received from the video stream decoder 40, and a keyframe for each shot (a zone including same scenes) is extracted. A predetermined number of representative frames designated by a user among the extracted keyframes of shots are selected in step 300. A frame summary is output using the selected representative frames in step 310.

FIG. 10 is a flowchart illustrating a process of receiving a video stream and extracting a keyframe for each shot.

Referring to FIG. 10, first, a received video stream is split into shots by detecting a scene change of the received video stream and obtaining temporal information of same scene zones divided by scene change boundaries in step 320. A keyframe for each shot is extracted in step 330. Methods of extracting a keyframe for each shot include a method of selecting a frame at a fixed location of each shot, for example, a first frame of each shot, a last frame of each shot, or a middle frame of each shot, and a method of selecting a frame with a less motion, a clear frame, or a frame with a distinct face.

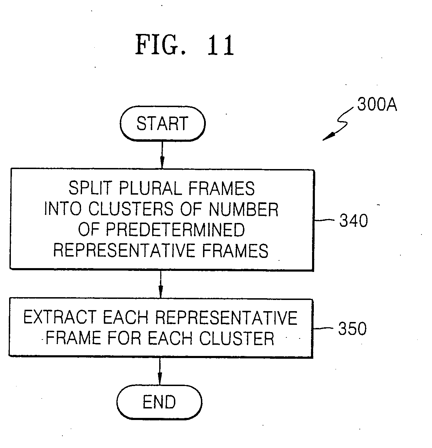

FIG. 11 is a flowchart illustrating a process of selecting representative frames from among keyframes corresponding to shots.

Referring to FIG. 11, first, a plurality of keyframes corresponding to shots are split into a number of clusters which is the same as a predetermined number of representative frames, which is designated by a user, provided by the frame summary generator 20 in step 340. A representative frame is selected from each cluster in step 350.

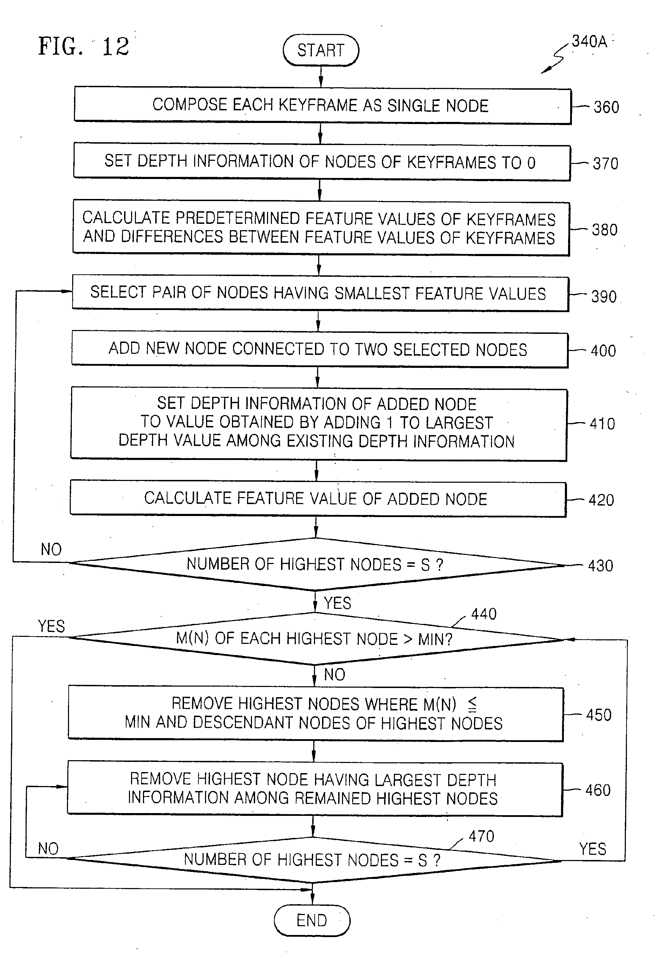

FIG. 12 is a flowchart illustrating a process of splitting a plurality of keyframes corresponding to shots into a number of clusters which is the same as a predetermined number (s) of representative frames.

Referring to FIG. 12, first, the keyframes corresponding to shots extracted by the keyframe extractor 100 become nodes in step 360, and depths (depth information) of the first nodes are set to 0 in step 370. A feature value of each keyframe is indicated using scalar or vector, and differences between the feature values of the keyframes are calculated in step 380. The feature value of each keyframe can be defined by a color histogram vector of each keyframe. Two nodes having the minimum difference between feature values are selected in step 390, and a new node connected to the two selected nodes is added in step 400. Depth information of the new node is set to a value obtained by adding 1 to the largest depth value among depth values of the existing nodes in step 410. A feature value of the newly added node is calculated in step 420. It is compared whether the number of highest nodes including the added node is equal to the predetermined number of representative frames designated by a user, and if the number of highest nodes is not equal to the predetermined number of representative frames, steps 390 through 420 are repeated. If the number of highest nodes is equal to the predetermined number of representative frames, it is determined whether the number of keyframes corresponding to shots M(N) included in each highest node is larger than a predetermined minimum number of frames MIN in step 440. The minimum number of frames MIN is obtained by multiplying a predetermined value between 0 and 1 and a value obtained by dividing the number of keyframes corresponding to shots by the number of highest nodes. If even one highest node does not satisfy the condition described above, highest nodes, which cannot satisfy the condition, and all descendant nodes of the highest nodes are removed in step 450, and a highest node having the largest depth among the remaining highest nodes is removed in step 460. In step 470, a highest node having the largest depth among remaining highest nodes is removed until the number of highest nodes is equal to the predetermined number of representative frames. Steps 440 through 470 are repeated until the number of keyframes corresponding to shots M(N) included in each highest node is larger than the predetermined minimum number of frames MIN.

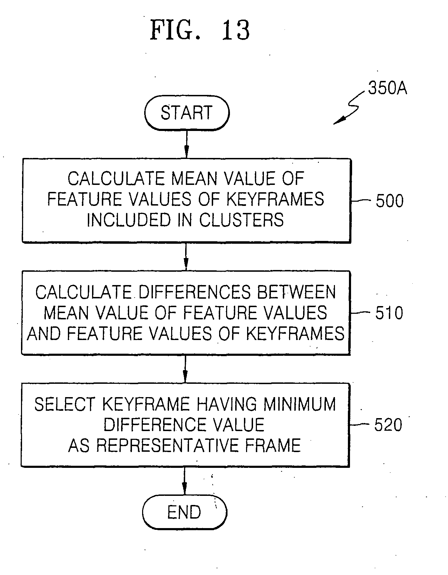

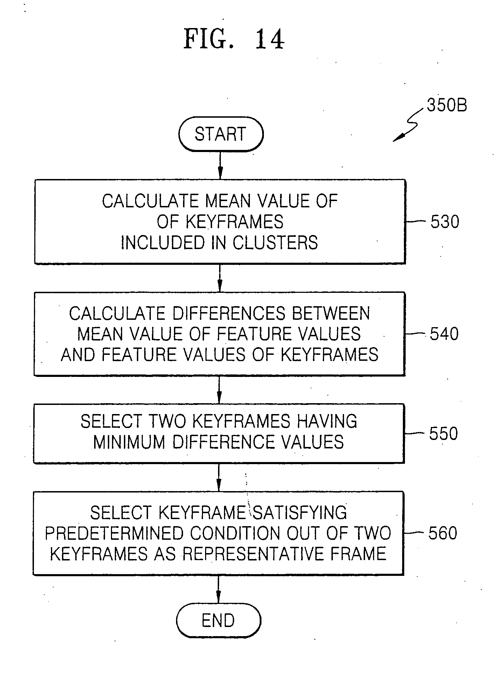

FIGS. 13 and 14 are flowcharts illustrating a process of extracting a representative frame for each cluster.

Referring to FIG. 13, first, a mean value of feature values of keyframes corresponding to shots included in each cluster is calculated in step 500, differences between the mean value and the feature values of the keyframes are calculated in step 510, and a keyframe having the minimum difference value is selected as a representative frame in step 520.

Also, referring to FIG. 14, a mean value of feature values of keyframes corresponding to shots included in each cluster is calculated in step 530, differences between the mean value and the feature values of the keyframes are calculated in step 540, two keyframes having the minimum difference values are selected in step 550, and a keyframe satisfying a predetermined condition, for example, a frame with a less motion or a frame with a distinct face, out of the two selected keyframes is selected as a representative frame in step 560.

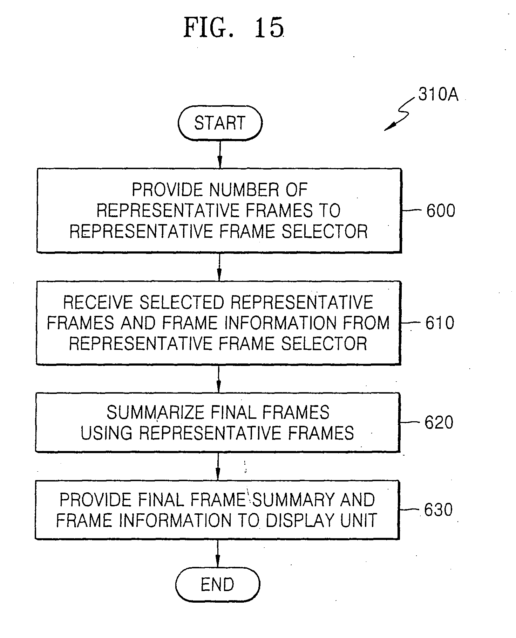

FIG. 15 is a flowchart illustrating a process of outputting a frame summary using selected representative frames.

Referring to FIG. 15, the frame summary generator 20 provides the predetermined number of representative frames designated by a user to the representative frame selector 10 in step 600, receives selected representative frames and frame information from the representative frame selector 10 in step 610, summarizes the representative frames in step 620, and provides the frame summary and frame information to the display unit 60 in step 630.

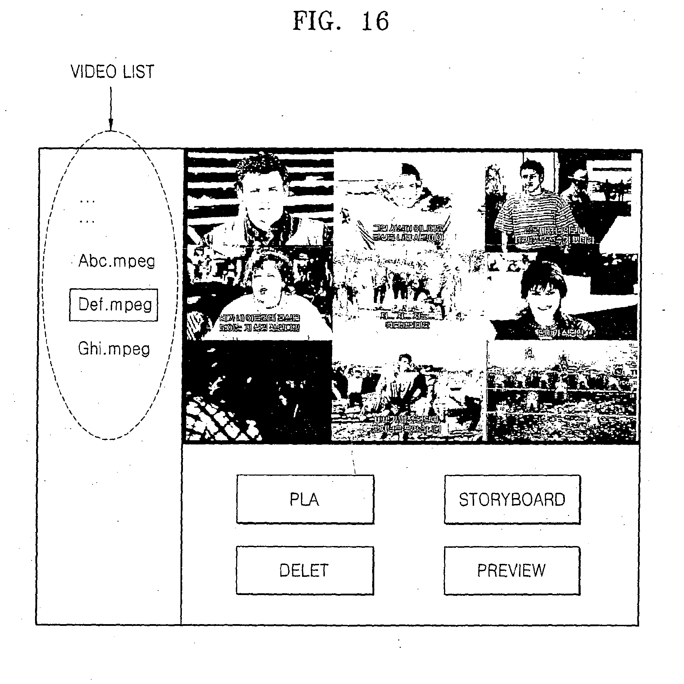

FIG. 16 is an example of an embodiment of a video tag, one of frame summary types.

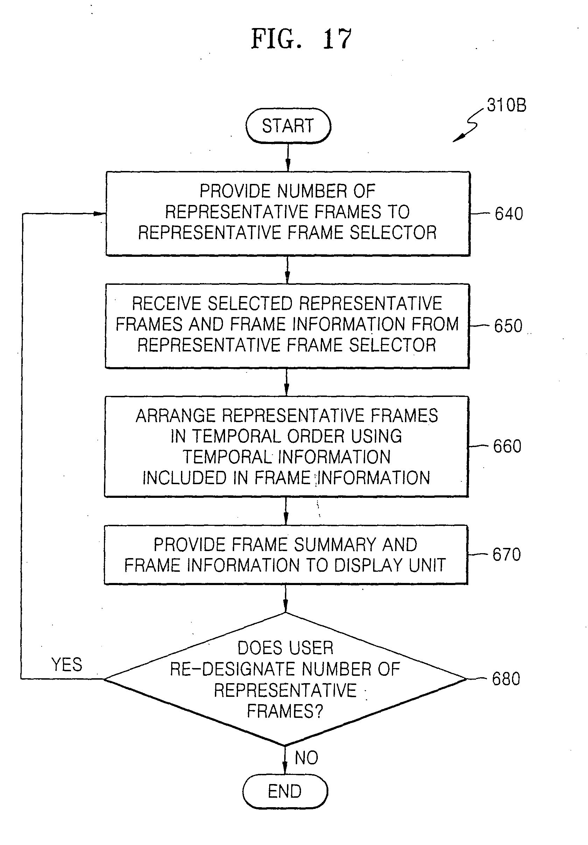

FIG. 17 is a flowchart illustrating another process of outputting a frame summary using selected representative frames.

Referring to FIG. 17, the frame summary generator 20 provides the predetermined number of representative frames designated by a user to the representative frame selector 10 in step 640, receives selected representative frames and frame information from the representative frame selector 10 in step 650, arranges the selected representative frames in temporal order using temporal information included in the frame information in step 660, and provides a frame summary and the frame information to the display unit 60 in step 670. If a user re-designates the number of representative frames in step 680, steps 640 through 670 are repeated.

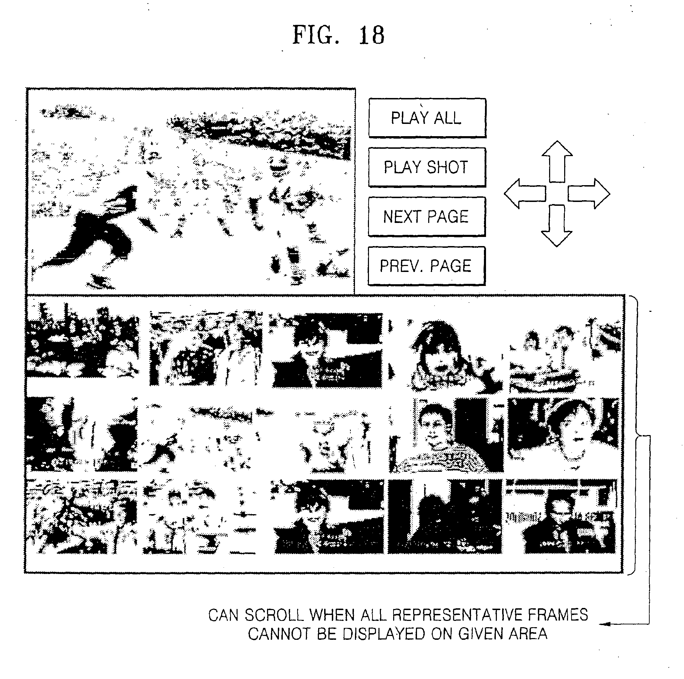

FIG. 18 is an example of an embodiment of a story board, one of the frame summary types.

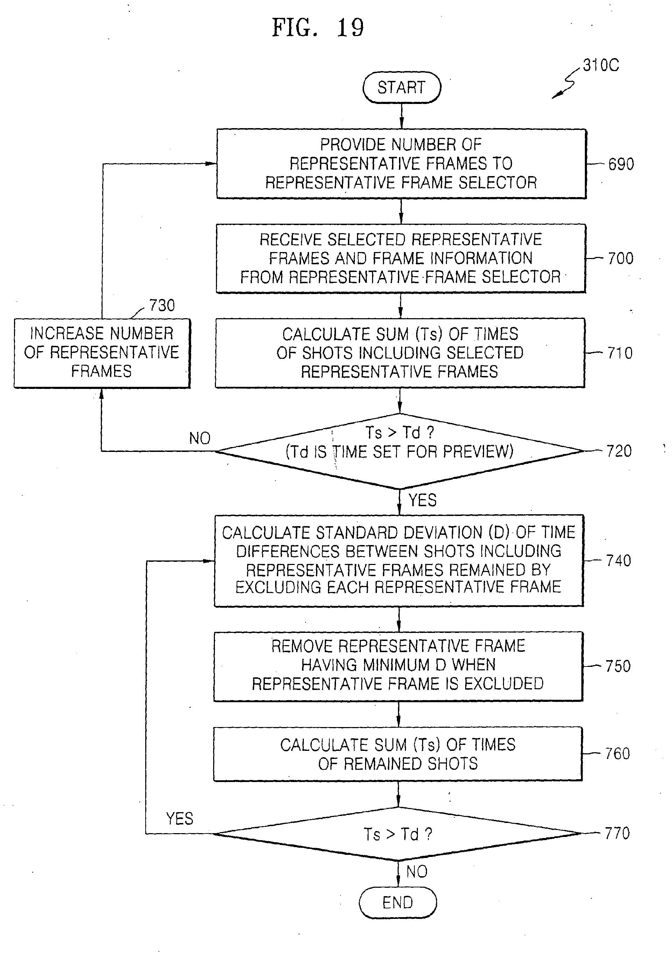

FIG. 19 is a flowchart illustrating another process of outputting a frame summary using selected representative frames.

Referring to FIG. 19, the frame summary generator 20 provides the predetermined number of representative frames designated by a user to the representative frame selector 10 in step 690, receives selected representative frames and frame information from the representative frame selector 10 in step 700, and calculates a sum Ts of the duration of each shot including the selected representative frames in step 710. If the sum Ts of the duration of each shot is equal to or less than a predetermined time Td set by a user in step 720, the frame summary generator 20 increases the number of representative frames in step 730, and steps 690 through 710 are repeated. The frame summary generator 20 calculates standard deviations D of time differences between shots including representative frames remained by excluding each representative frame in step 740, removes a shot including representative frame having the minimum standard deviation when the representative frame is excluded in step 750, and calculates a sum Ts of the duration of the remaining shots in step 760. Steps 740 through 760 are repeated until the sum Ts of the duration of each shot is shorter than the predetermined time Td set by the user in step 770.

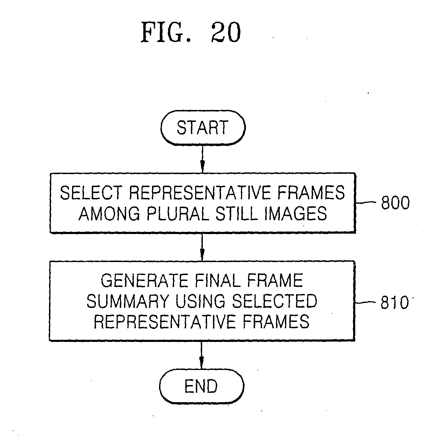

FIG. 20 is a flowchart illustrating an entire operation of an apparatus for summarizing a plurality of still images according to an embodiment of the present invention.

Referring to FIG. 20, the representative still image selector 200 receives still images from the still image storage unit 230 and selects representative frames according to the predetermined number of representative frames, which is designated by a user, provided from the still image summary generator 210 in step 800. The still image summary generator 210 finally outputs a frame summary to the display unit 235 using the selected representative frames in step 810.

Since a process of extracting the representative frames from the still images according to the predetermined number of representative frames is a process in which the keyframes corresponding to shots are substituted by the still images, in the process of extracting the representative frames from a video stream, which is described with reference to FIGS. 11 through 14, the process of extracting the representative frames is omitted.

As described above, according to a method and apparatus for summarizing a plurality of frames according to embodiments of the present invention, since video summarization adaptively responds to the number of clusters demanded by a user, various video summarization types are possible, and the user can understand the contents of video streams easily and quickly and do activity such as selection, storing, editing, and management. Also, since representative frames are selected from clusters including frames corresponding to scenes with a high appearance frequency, frames whose contents are not distinguishable or whose appearance frequencies are low can be excluded from the video summarization, and the possibility of selected frames corresponding to different scenes is higher. Therefore, reliability of the user with respect to a frame summary can be higher, and since video formats, decoder characteristics, characteristics of a shot discriminating method, and characteristics of a shot similarity function are independently designed, the method and apparatus can be applied to various application environments.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of summarizing video streams, the method comprising:
(a) receiving a video stream and extracting a keyframe for each shot;
(b) selecting a predetermined number of representative frames from the keyframes corresponding to the shots; and
(c) outputting a frame summary using the representative frames.

2. The method of claim 1, wherein step (b) comprises:
(b1) splitting the keyframes corresponding to the shots into a number of clusters which is the same as a predetermined number of representative frames; and
(b2) extracting a representative frame from each cluster.

3. The method of claim 2, wherein step (b1) comprises:
(bb1) composing a node having 0 depth (depth information) for each keyframe of the plurality of keyframes and calculating feature values of the keyframes and differences between the feature values of the keyframes;
(bb2) selecting two highest nodes having the minimum difference between feature values;
(bb3) connecting the two selected nodes to a new node having a depth obtained by adding 1 to the largest value of depths of the highest nodes and calculating a feature value of the new node; and
(bb4) until the number of highest nodes is equal to a predetermined number of representative frames, repeating steps (bb2) and (bb3).

4. The method of claim 3, further comprising:
(bb5) comparing the number of keyframes corresponding to shots included in each highest node and a predetermined value (MIN);
(bb6) if highest nodes, each including a less number of keyframes than the predetermined value (MIN), exist, removing the highest nodes and descendant nodes of the highest nodes;
(bb7) removing a highest node having the largest depth among the remaining highest nodes;
(bb8) until the number of highest nodes is equal to the predetermined number of representative frames, repeating step (bb7); and
(bb9) until the number of keyframes corresponding to shots included in each highest node is larger than the predetermined value (MIN), repeating steps (bb6) through (bb8).

5. The method of any one of claims 2 to 4, wherein step (b2) comprises:
calculating a mean value of feature values of keyframes included in each cluster;
calculating differences between the mean value and the feature values of the keyframes; and
selecting a keyframe having the minimum difference value as a representative frame.

6. The method of any one of claims 2 to 4, wherein step (b2) comprises:
calculating a mean value of feature values of keyframes included in each cluster;
calculating differences between the mean value and the feature values of the keyframes;
selecting two keyframes having the minimum difference values; and
selecting a keyframe satisfying a predetermined condition out of the two selected keyframes as a representative frame.

7. The method of any preceding claim, wherein step (c) comprises:
arranging the selected representative frames in temporal order using information of the selected representative frames;
outputting a frame summary and frame information; and
if the number of representative frames is re-designated, outputting a frame summary and frame information by arranging representative frames, which are selected according to the re-designated number of representative frames, in temporal order.

8. The method of any one of claims 1 to 6, wherein step (c) comprises:
(c1) until a sum of the duration of each shot including the selected representative frames is longer than a predetermined time, increasing the number of representative frames;
(c2) calculating standard deviations of time differences between shots including representative frames remained by excluding each representative frame;
(c3) removing a representative frame having the minimum standard deviation when the representative frame is excluded;
(c4) until a sum of the duration of each shot including the remaining representative frames is shorter than a predetermined time, repeating steps (c2) and (c3).

9. A method of summarizing a plurality of still images, the method comprising:
(x) splitting a plurality of still images into a number of clusters which is the same as a predetermined number of representative frames;
(y) extracting a representative frame for each cluster; and
(z) generating a frame summary using the selected representative frames.

10. The method of claim 9, wherein step (x) comprises:
(x1) composing a node having 0 depth for each still image and calculating feature values of the still images and differences between the feature values of the still images;
(x2) selecting two highest nodes having the minimum difference between feature values;
(x3) connecting the two selected nodes to a new node having a depth obtained by adding 1 to the largest value of depths of the highest nodes and calculating a feature value of the new node; and
(x4) the number of highest nodes is equal to the predetermined number of representative frames, repeating steps (x2) and (x3).

11. The method of claim 10, further comprising:
(x5) comparing the number of still images included in each highest node and a predetermined value (MIN);
(x6) if highest nodes, each including a less number of still images than the predetermined value (MIN), exist, removing the highest nodes and descendant nodes of the highest nodes;
(x7) removing a highest node having the largest depth among the remaining highest nodes;
(x8) until the number of highest nodes is equal to the predetermined number of representative frames, repeating step (x7); and
(x9) until the number of still images included in each highest node is larger than the predetermined value (MIN), repeating steps (x6) through (x8).

12. The method of any one of claims 9 to 11, wherein step (y) comprises:
calculating a mean value of feature values of still images included in each cluster;
calculating differences between the mean value and the feature values of the still images; and
selecting a still image having the minimum difference value as a representative frame.

13. The method of any one of claims 9 to 11, wherein step (y) comprises:
calculating a mean value of feature values of still images included in each cluster;
calculating differences between the mean value and the feature values of the still images;
selecting two still images having the minimum difference values; and
selecting a still image satisfying a predetermined condition out of the two selected still images as a representative frame.

14. An apparatus for summarizing video streams, the apparatus comprising:
a representative frame selector receiving a video stream and selecting representative frames; and
a frame summary generator summarizing the video stream using the selected representative frames and outputting a frame summary and frame information.

15. The apparatus of claim 14, wherein the representative frame selector comprises:
a keyframe extractor receiving a video stream, extracting a keyframe for each shot, and outputting keyframes corresponding to shots;
a frame splitting unit receiving the keyframes corresponding to shots and splitting the keyframes corresponding to shots into a number of clusters which is the same as a predetermined number of representative frames; and
a cluster representative frame extractor selecting one representative frame among keyframes corresponding to shots included in each cluster and outputting the representative frames.

16. The apparatus of claim 15, wherein the frame splitting unit comprises:
a basic node composing unit receiving the keyframes corresponding to shots and composing a node having 0 depth for each keyframe;
a feature value calculator calculating feature values of the keyframes of the nodes and differences between the feature values; and
a highest node composing unit selecting two highest nodes having the minimum difference between the feature values and connecting the two selected nodes to a new node having a depth obtained by adding 1 to the largest value of depths of the highest nodes.

17. The apparatus of claim 16, further comprising:
a minor cluster removing unit removing highest nodes, each including a less number of keyframes than a predetermined value (MIN), and descendant nodes of the highest nodes; and
a cluster splitting unit removing a highest node having the largest depth among the remaining highest nodes.

18. The apparatus of any one of claims 15 to 17, wherein the cluster representative frame extractor calculates a mean value of feature values of keyframes included in each cluster and differences between the mean value and the feature values of the keyframes and selects a keyframe having the minimum difference value as a representative frame.

19. The apparatus of any one of claims 15 to 17, wherein the cluster representative frame extractor calculates a mean value of feature values of keyframes included in each cluster and differences between the mean value and the feature values of the keyframes, selects two keyframes having the minimum difference values, and selects a keyframe satisfying a predetermined condition out of the two selected keyframes as a representative frame.

20. An apparatus for summarizing still images, the apparatus comprising:
a representative still image selector receiving still images and selecting a predetermined number of representative frames; and
a still image summary generator summarizing the still images using the selected representative frames and outputting a frame summary and frame information.

21. The apparatus of claim 20, wherein the representative still image selector comprises:
a still image splitting unit receiving the still images and splitting the still images into a number of clusters which is the same as a predetermined number of representative frames; and
a cluster representative still image extractor selecting one representative frame among still images included in each cluster and outputting the representative frames.

22. The apparatus of claim 21, wherein the still image splitting unit comprises:
a still image basic node composing unit receiving the still images and composing a node having 0 depth for each still image;
a still image feature value calculator calculating feature values of the still images of the nodes and differences between the feature values; and
a still image highest node composing unit selecting two highest nodes having the minimum difference between the calculated feature values and connecting the two selected nodes to a new node having a depth obtained by adding 1 to the largest value of depths of the highest nodes.

23. The apparatus of claim 22, further comprising:
a still image minor cluster removing unit removing highest nodes, each including a less number of still images than a predetermined value (MIN), and descendant nodes of the highest nodes; and
a still image cluster splitting unit removing a highest node having the largest depth among the remaining highest nodes.

24. The apparatus of any one of claims 21 to 23, wherein the cluster representative still image extractor calculates a mean value of feature values of still images included in each cluster and differences between the mean value and the feature values of the still images and selects a still image having the minimum difference value as a representative frame.

25. The apparatus of any one of claims 21 to 23, wherein the cluster representative still image extractor calculates a mean value of feature values of still images included in each cluster and differences between the mean value and the feature values of the still images, selects two still images having the minimum difference values, and selects a still image satisfying a predetermined condition out of the two selected still images as a representative frame.

26. A computer readable medium having recorded thereon a computer readable program for performing the method of anyone of claim 1 through claim 13.
